# EUROPEAN PATENT SPECIFICATION

(11) **EP 1 884 126 B1**
(45) Date of publication and mention of the grant of the patent: **27.04.2016**
(21) Application number: 06759894.6
(22) Date of filing: 16.05.2006
(51) Int. Cl.: H04W 8/24, H04W 8/22, H04W 8/18, H04W 88/06

(54) **METHOD AND APPARATUS FOR REPORTING EVOLVED UTRAN CAPABILITIES**
VERFAHREN UND VORRICHTUNG ZUM MELDEN EVOLVIERTER UTRAN-FÄHIGKEITEN
PROCEDE ET APPAREIL POUR L'ETABLISSEMENT DE RAPPORT DE CAPACITES EVOLUEES DE RESEAU D'ACCES TERRESTRE DE SYSTEMES UNIVERSELS DE TELECOMMUNICATIONS MOBILES

(30) Priority: 19.05.2005 US 682634 P; 11.05.2006 US 432781
(43) Date of publication of application: 06.02.2008
(73) Proprietor: InterDigital Technology Corporation, Wilmington, DE 19809 (US)
(72) Inventor: SHAHEEN, Kamel, M., King Of Prussia, Pennsylvania 19406 (US)
(74) Representative: Awapatent AB
(86) International application number: PCT/US2006/018834
(87) International publication number: WO 2006/124840

(56) References cited:
- WO-A2-2005/039201
- US-A- 5 862 480
- US-A- 5 862 480
- US-A1- 2004 106 430
- US-A1- 2005 073 977
- US-A1- 2005 288 016
- US-B1- 6 771 964
- NTT DOCOMO ET AL: "Proposed Study Item on Evolved UTRA and UTRAN", 3GPP DRAFT; RP-040461 PROPOSED SID ON EVOLVED UTRA AND UTRAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Athens, Greece; 20041207, 7 December 2004 (2004-12-07), XP050203764, [retrieved on 2004-12-07]

## Description

### FIELD OF INVENTION

The present invention is related to a wireless communication system. More particularly, the present invention is related to a method and wireless transmit receive unit for reporting evolved universal mobile telecommunication systems (UMTS) terrestrial radio access network (E-UTRAN) capabilities.

### BACKGROUND

Different types of wireless access systems have been developed to provide different types of services. Some examples of the wireless access systems include wireless local area networks (WLANs), (such as IEEE 802-based networks), and cellular networks, (such as UMTS terrestrial radio access network (UTRAN), a global packet radio service (GPRS)/enhanced data rate for global system for mobile communication (GSM) evolution (EDGE) radio access network (GERAN), or the like). Each of these networks have been developed and tailored to provide specific applications.

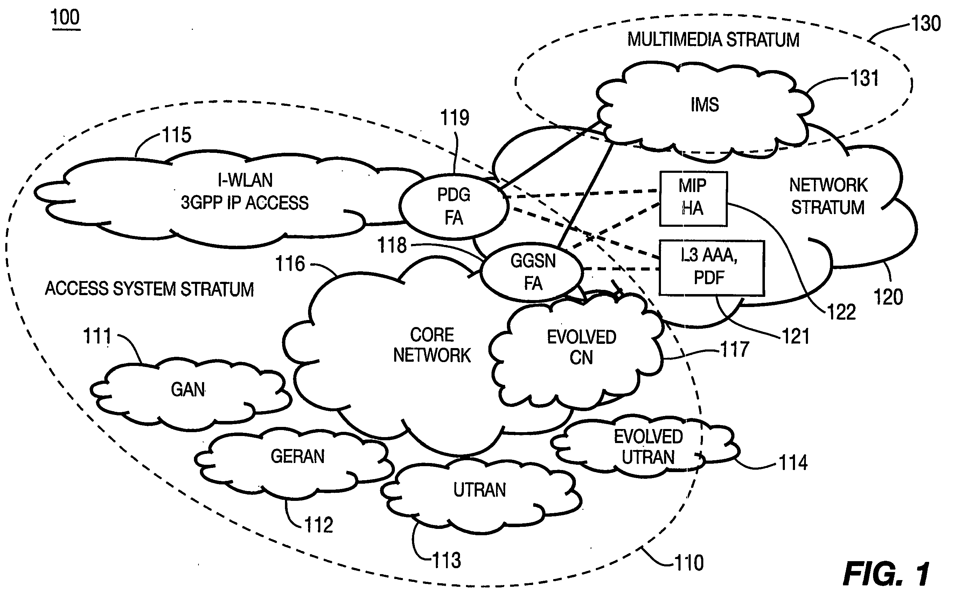

Proposals for an E-UTRAN have been made to improve wireless system capacity and enhanced performance. The E-UTRAN will provide significant advantages over existing wireless communication systems and additional services may be available through the E-UTRAN. Figure 1 shows an exemplary integrated wireless communication system 100 including the E-UTRAN. The system 100 includes an access system stratum 110, a network stratum 120 and a multimedia stratum 130. The access system stratum 110 includes a plurality of radio access networks (RANs), a core network (CN) 116 and an evolved CN 117. The RANs include a generic access network (GAN) 111, a GERMAN 112, a UTRAN 113, an E-UTRAN 114 and an interworking wireless local area network (I-WLAN) 115. The RANs 111-115 are connected to the CN 116 or the evolved CN 117 to provide services, (such as multimedia services from an Internet protocol (IP) multimedia subsystem (IMS) 131), to one or more WTRUs while interacting with an authentication, authorization and accounting (AAA) server 121, a mobile IP (MIP) server 122, or other network entities in the network stratum 120 via a gateway GPRS support node (GGSN) 118 or a packet data gateway (PDG) 119.

Currently, multimode WTRUs for supporting several wireless communication systems are available. The capabilities of each of the WTRUs may vary. For example, some WTRUs may support only UMTS, while other WTRUs may have an I-WLAN support. The WTRUs that are capable of supporting E-UTRAN will also be available in the future. When the WTRU has an E-UTRAN support, it would be desirable to report the WTRU capabilities to a CN and to report additional E-UTRAN services to the WTRUs such that the WTRUs may receive and/or utilize such additional services.

WO 2005/039201 A2 discloses WTRUs having dual-mode capabilities, and more particularly to a method and an apparatus for reporting dual mode capabilities and for reporting availability of network interworking. >

### SUMMARY

The present invention is related to a method for use in a WTRU and a WTRU according to claims 1-8. The WTRU and the corresponding method relate to reporting E-UTRAN capabilities. The WTRU may send a first message to report the E-UTRAN capabilities of the WTRU to a CN. The CN may then update the WTRU capabilities based on the first message. The first message may include a radio access capability information element (IE) which may include information regarding the E-UTRAN capabilities of the WTRU and/or a network capability IE which may include information regarding network capabilities of the WTRU. The CN may send a second message to the WTRU to report network capabilities with respect to the radio access networks (RANs) to which the core network is connected and services that can be provided over the E-UTRAN.

BRIEF DESCRIPTION OF THE DRAWINGS
Figure 1 shows an exemplary prior art integrated wireless communication system including an E-UTRAN and an evolved CN.
Figure 2 is a block diagram of an exemplary integrated wireless communication system configured in accordance with the present invention.
Figure 3 is a flow diagram of a process for reporting E-UTRAN capabilities of a multimode WTRU in accordance with the present invention.
Figures 4A and 4B are diagrams of network capability IEs in accordance with prior art and the present invention.
Figures 5A and 5B are diagrams of radio access capability IEs in accordance with the prior art and the present invention.

### DETAILED DESCRIPTION OF THE PREFERRED EMBODIMENTS

When referred to hereafter, the terminology "WTRU" includes but is not limited to a user equipment, a mobile station, a fixed or mobile subscriber unit, a pager, or any other type of device capable of operating in a wireless environment.

The features of the present invention may be incorporated into an integrated circuit (IC) or be configured in a circuit comprising a multitude of interconnecting components.

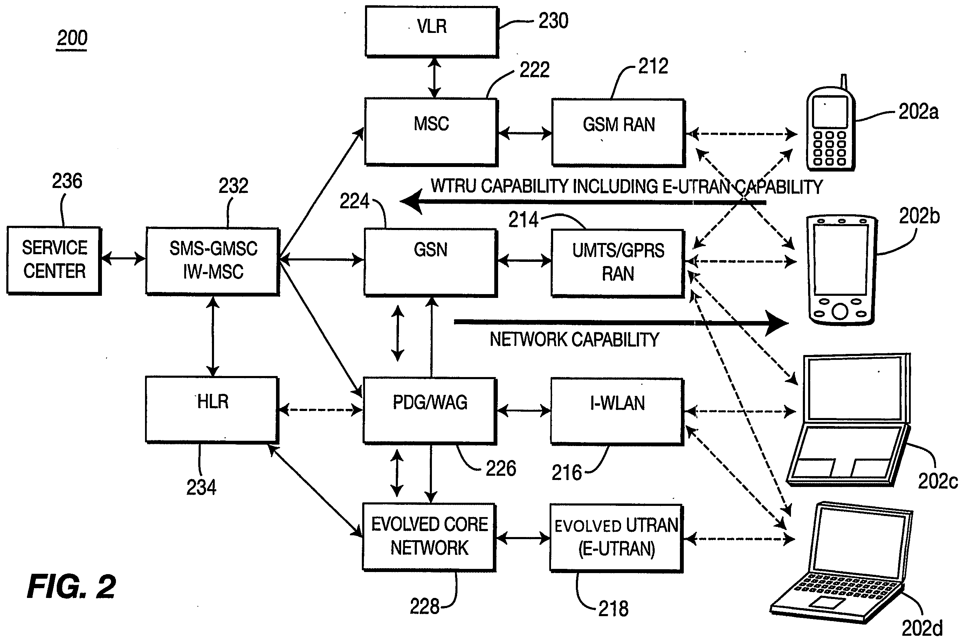

Figure 2 is a block diagram of an exemplary integrated wireless communication system 200 configured in accordance with the present invention. In Figure 2, many different types of WTRUs 202a-202d having different capabilities are communicating with the integrated system 200 including many different types of RANs 212, 214, 216 and 218. For example, a cellular phone 202a and a personal data assistance (PDA) 202b are shown communicating with a global standards for mobile communication (GSM) RAN 212 and a UMTS/GPRS RAN 214, and a laptop computer 202c is shown communicating with the UMTS/GPRS RAN 214 and an I-WLAN 216. Another laptop computer 202d is shown communicating with the UMTS/GPRS 214, an I-WLAN 216 and an E-UTRAN 218. All WTRUs 202a-202d have a capability to communicate with the UMTS/GPRS RAN 214. As mentioned above, the system 200 of Figure 2 is presented as an example. Thus, different types of WTRUs having different capabilities and different types and compositions of RANs are possible.

Each of the RANs 212-218 is connected to a CN entity. For example, the GSM RAN 212 is connected to a mobile switching center (MSC) 222 to handle calls under GSM radio access technology (RAT). The UMTS/GPRS RAN 214 is connected to a GPRS support node (GSN) 224 for supporting UMTS and GPRS services. The I-WLAN 216 is connected to a PDG and/or a WLAN access gateway (WAG) 226 for supporting WLAN services. The E-UTRAN 218 is connected to the evolved CN 228 for supporting E-UTRAN services. The CN entities 222-228 are further connected to other network entities, such as a visitor location register (VLR) 230, a home location register (HLR) 234 and a short message service (SMS)-gateway mobile switching center (GMSC)/interworking mobile switching center (IW-MSC) 232 for providing a service, such as SMS, from a service center 236. The SMS-GMSC/IW-MSC 232 serves as a gateway between the service center 236 and the MSC 222, the GSN 224 or the PDG/WAG 226. The SMS-GMSC/IW-MSC 232 accepts mobile terminated or originated messages and delivers the messages to and from the MSC 222, the GSN 224 or the PDG/WAG 226.

In accordance with the present invention, a WTRU 202a-202d reports WTRU capabilities including E-UTRAN capabilities to the CN over the UMTS/GPRS RAN 214. After the CN is aware of the capabilities of the WTRU 202a-202d, the CN may report network capabilities, such as interworking capabilities and other types of services, (e.g., services that are available to WTRUs having E-UTRAN capabilities), to the WTRU 202a-202d over the UMTS/GPRS RAN 214.

The operator may provide the WTRU (optionally upon request from the WTRU) inter-access network information pertaining to locally available 3GPP and non-3GPP access technologies, (e.g., access name, type, capability, or the like). The inter-access network information may include operator preferences based on locally available 3GPP and non-3GPP access technologies, and the information may be restricted to access technologies and/or networks that the WTRU can use based on WTRU capabilities and/or subscription.

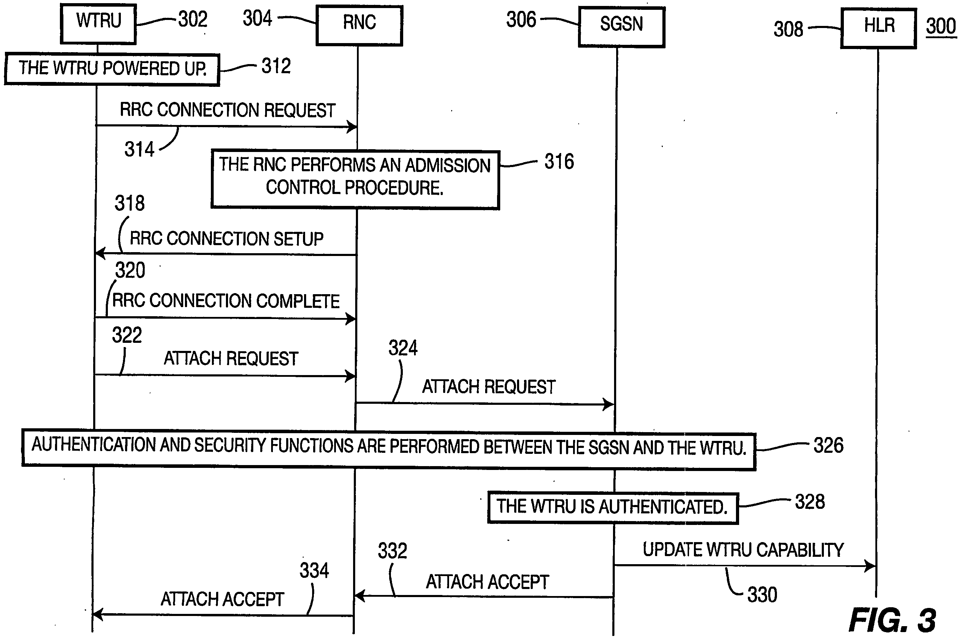

Figure 3 is a flow diagram of a process 300 for reporting E-UTRAN capabilities of a multimode WTRU 302 in accordance with the present invention. The WTRU 302 includes multiple radio units for supporting multiple wireless communication interfaces, such as an E-UTRAN air interface, an UTRAN air interface, an I-WLAN air interface, a GPRS/GSM air interface, or the like. Preferably, the WTRU 302 informs a CN about its E-UTRAN capability during an attachment procedure to the UMTS system, (i.e., registration).

Upon power up at step 312, the WTRU 302 sends a radio resource control (RRC) connection request message to a radio network controller (RNC) 304 of an UMTS/GPRS RAN to establish a connection to the UMTS/GPRS RAN (step 314). The RNC 304 performs an admission control procedure based on a plurality of factors, such as the availability of resources, or the like (step 316). If the RNC 304 decides to admit the WTRU 302, the RNC 304 sends an RRC connection setup message to the WTRU 302 (step 318). The WTRU 302 then sends an RRC connection complete message to the RNC 304 (step 320).

The WTRU 302 then sends an attach request message to the RNC 304 in order to receive GPRS services (step 322). In accordance with the present invention, the E-UTRAN capability information is sent along with the attach request message. The RNC 304 selects a serving GRPS support node (SGSN) 306 to serve the WTRU 302 and forwards the attach request message to the selected SGSN along with the E-UTRAN capability information (step 324). Authentication and security functions are then performed between the WTRU 302 and the SGSN 306 (step 326). Once the WTRU 302 is authenticated at step 328, the SGSN 306 sends an update WTRU capability message to an HLR 308 to update WTRU capabilities (step 330). The SGSN 306 then sends an attach accept message to the WTRU 302 via the RNC 304 (steps 332, 334). The SGSN 306 may include the message to report the network capabilities in the attach accept message.

In accordance with the present invention, a radio access capability IE and a network capability IE of existing GPRS/UMTS capability messages are amended to include new values to report the E-UTRAN capability information to aCN.

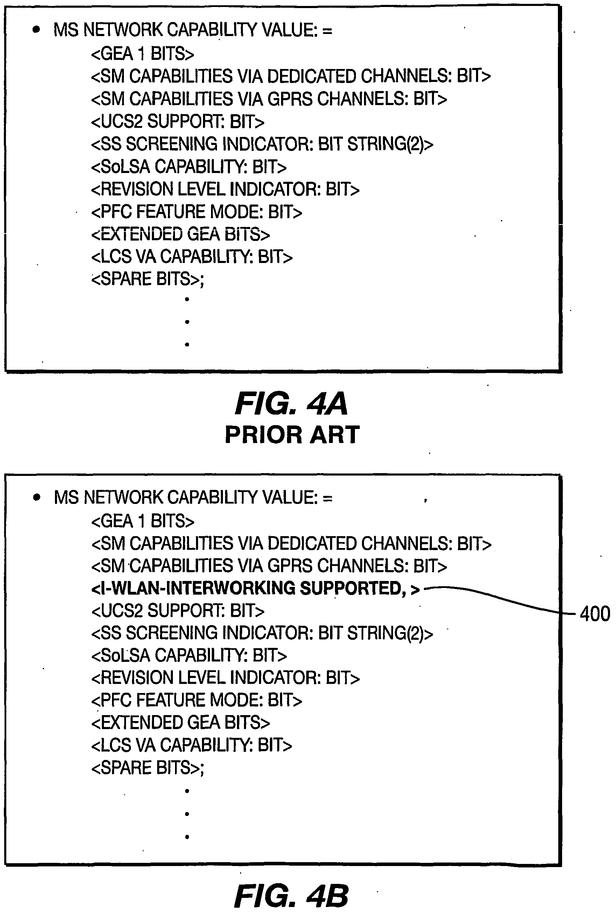

Figures 4A and 4B show the network capability IEs before and after being amended in accordance with the present invention. The network capability IEs report WTRU characteristics to the CN. As shown in Figure 4B, the network capability IE includes a new value 400 to indicate the E-UTRAN capabilities, such as an I-WLAN interworking capability, of the WTRU in accordance with the present invention.

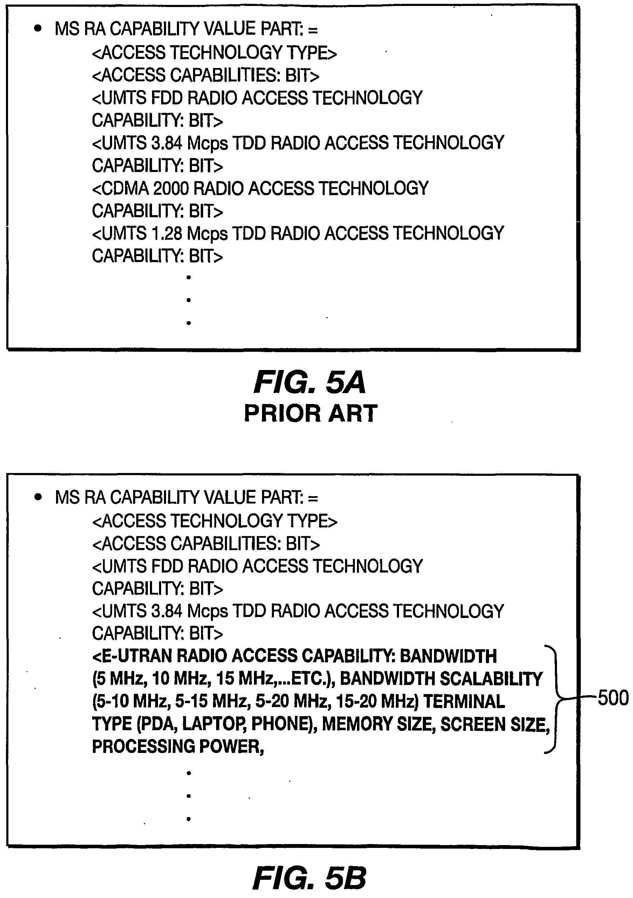

Figures 5A and 5B show the radio access capability IEs before and after being amended in accordance with the present invention. The radio access capability IEs report information concerning radio aspects of the WTRU to the CN. As shown in Figure 5B, the radio access capability IE includes a new value 500 to report the multimode capabilities of the WTRU, (e.g., support ofE-UTRAN and/or other technologies) to the CN. The new value 500 in the radio access capability IE carries all aspects of the E-UTRAN capabilities of the WTRU including supported technology, (e.g., orthogonal frequency division multiplexing (OFDM), orthogonal frequency division multiple access (OFDMA), wideband code division multiple access (WCDMA), or the like), supported bandwidth, (e.g., 5 MHz, 10 MHz, 15 MHz, 20 MHz, etc.), scalability, supported bit rates, quality of service (QoS) support, terminal type, (e.g., PDA, laptop, phone), memory size, screen size, processing power, or the like.

As described hereinbefore, after updating the WTRU capability, the CN may send a second message to the WTRU 302 to report the availability of new network capabilities, (such as I-WLAN capabilities and evolved CN capabilities), or services that can be provided over the E-UTRAN. The second message may be included in the attach accept message or any other message. The availability of new network capabilities may be indicated by using the same network capability IE shown in Figure 4B.

Although the features and elements of the present invention are described in the preferred embodiments in particular combinations, each feature or element can be used alone without the other features and elements of the preferred embodiments or in various combinations with or without other features and elements of the present invention.

## Claims

1. A method for use in a wireless transmit/receive unit, WTRU (202a-d; 302), the method comprising:
generating an attach request message that includes a network capability information element, IE, and a radio access capability IE, wherein the radio access capability IE indicates evolved universal mobile telecommunication systems, UMTS, terrestrial radio access network, E-UTRAN, capabilities of the WTRU (202a-d; 302);
transmitting (322, 324) the attach request message to a core network, CN (306), via a first radio access network, RAN (304);
receiving (332, 334) an attach accept message from the CN (306) via the first RAN (304);
receiving a message from the CN indicating capabilities of a second RAN, based on the information included in the attach request message, through which the CN may be accessed, wherein the second RAN includes an E-UTRAN; and
receiving a service from the CN via the first RAN or the second RAN.

2. The method of claim 1, wherein the radio access capability IE includes one or more of supported technology information, supported bandwidth information, scalability information, supported bit rates information, quality of service, QoS, information, terminal type information, memory size information, screen size information, and processing power information.

3. The method of claim 1, wherein the CN is an evolved CN.

4. The method of claim 1, wherein the first RAN is a UTRAN or an E-UTRAN.

5. A wireless transmit/receive unit, WTRU (202a-202d; 302), comprising:
a controller configured to generate an attach request message that includes a network capability information element, IE, and a radio access capability IE, wherein the radio access capability IE indicates evolved universal mobile telecommunication systems, UMTS, terrestrial radio access network, E-UTRAN, capabilities of the WTRU (202a-202d; 302);
a transmitter configured to send the attach request message to a core network, CN, via a first radio access network, RAN; and
a receiver configured to:
receive an attach accept message from the CN via the first RAN;
receive a message from the CN indicating capabilities of a second RAN, based on the information included in the attach request message, through which the CN may be accessed, wherein the second RAN includes an E-UTRAN; and
receive a service from the CN via the first RAN or the second RAN.

6. The WTRU of claim 5, wherein the radio access capability IE includes one or more of supported technology information, supported bandwidth information, scalability information, supported bit rates information, quality of service, QoS, information, terminal type information, memory size information, screen size information, or processing power information.

7. The WTRU of claim 5, wherein the CN is an evolved CN.

8. The WTRU of claim 5, wherein the first RAN is a UTRAN or an E-UTRAN.

## Patentansprüche

1. Verfahren zur Verwendung in einer Drahtlos-Sende- und-Empfangseinheit (Wireless Transmit/Receive Unit, WTRU) (202a-d; 302), wobei das Verfahren Folgendes umfasst:
Erzeugen einer Attach-Anforderungsmeldung, die ein Netzfähigkeits-Informationselement (IE) und ein Funkzugangsfähigkeits-IE enthält, wobei das Funkzugangsfähigkeits-IE Evolved Universal Mobile Telecommunication Systems (UMTS) Terrestrial Radio Access Network (E-UTRAN)-Fähigkeiten der WTRU (202a-d; 302) angibt;
Senden (322, 324) der Attach-Anforderungsmeldung an ein Kernnetz (Core Network, CN) (306) über ein erstes Funkzugangsnetz (Radio Access Network, RAN) (304);
Empfangen (332, 334) einer Attach-Akzeptanzmeldung von dem CN (306) über das erste RAN (304);
Empfangen einer Meldung von dem CN, die Fähigkeiten eines zweiten RAN angibt, auf der Basis der in der Attach-Anforderungsmeldung enthaltenen Informationen, durch die auf das CN zugegriffen werden kann, wobei das zweite RAN ein E-UTRAN enthält; und
Empfangen eines Dienstes von dem CN über das erste RAN oder das zweite RAN.

2. Verfahren nach Anspruch 1, wobei das Funkzugangsfähigkeits-IE eines oder mehrere von Folgendem enthält: Informationen über unterstützte Technologie, Informationen über unterstützte Bandbreite, Skalierbarkeitsinformationen, Informationen über unterstützte Bitraten, Dienstqualitäts (Quality of Service, QoS)-Informationen, Endgerätetyp-Informationen, Speichergröße-Informationen, Bildschirmgröße-Informationen und Verarbeitungsleistungsinformationen.

3. Verfahren nach Anspruch 1, wobei das CN ein Evolved CN ist.

4. Verfahren nach Anspruch 1, wobei das erste RAN ein UTRAN oder ein E-UTRAN ist.

5. Drahtlos-Sende- und -Empfangseinheit (Wireless Transmit/Receive Unit, WTRU) (202a-202d; 302), die Folgendes umfasst:
eine Steuereinheit, die dafür konfiguriert ist, eine Attach-Anforderungsmeldung zu erzeugen, die ein Netzfähigkeits-Informationselement (IE) und ein Funkzugangsfähigkeits-IE enthält, wobei das Funkzugangsfähigkeits-IE Evolved Universal Mobile Telecommunication Systems (UMTS) Terrestrial Radio Access Network (E-UTRAN)-Fähigkeiten der WTRU (202a-d; 302) angibt;
einen Sender, der dafür konfiguriert ist, die Attach-Anforderungsmeldung an ein Kernnetz (Core Network, CN) über ein erstes Funkzugangsnetz (Radio Access Network, RAN) zu senden; und
einen Empfänger, der für Folgendes konfiguriert ist:
Empfangen einer Attach-Akzeptanzmeldung von dem CN über das erste RAN;
Empfangen einer Meldung von dem CN, die Fähigkeiten eines zweiten RAN angibt, auf der Basis der in der Attach-Anforderungsmeldung enthaltenen Informationen, durch die auf das CN zugegriffen werden kann, wobei das zweite RAN ein E-UTRAN enthält; und
Empfangen eines Dienstes von dem CN über das erste RAN oder das zweite RAN.

6. WTRU nach Anspruch 5, wobei das Funkzugangsfähigkeits-IE eines oder mehrere von Folgendem enthält: Informationen über unterstützte Technologie, Informationen über unterstützte Bandbreite, Skalierbarkeitsinformationen, Informationen über unterstützte Bitraten, Dienstqualitäts (Quality of Service, QoS)-Informationen, Endgerätetyp-Informationen, Speichergröße-Informationen, Bildschirmgröße-Informationen oder Verarbeitungsleistungsinformationen.

7. WTRU nach Anspruch 5, wobei das CN ein Evolved CN ist.

8. WTRU nach Anspruch 5, wobei das erste RAN ein UTRAN oder ein E-UTRAN ist.

## Revendications

1. Procédé destiné à être utilisé dans une unité émettrice-réceptrice sans fil, WTRU (202a-d; 302), le procédé comprenant :
la génération d'un message de demande de rattachement qui comprend un élément d'informations, IE, de capacité de réseau et un IE de capacité d'accès radio, dans lequel l'IE de capacité d'accès radio indique des capacités de réseau d'accès radio terrestre de système de télécommunications mobiles universel, UMTS, évolué, E-UTRAN, de la WTRU (202a-d; 302) ;
la transmission (322, 324) du message de demande de rattachement à un réseau central, CN (306), par l'intermédiaire d'un premier réseau d'accès radio, RAN (304) ;
la réception (332, 334) d'un message d'acceptation de rattachement en provenance du CN (306) par l'intermédiaire du premier RAN (304) ;
la réception d'un message en provenance du CN indiquant des capacités d'un deuxième RAN sur la base des informations incluses dans le message de demande de rattachement par l'intermédiaire desquelles le CN est accessible, dans lequel le deuxième RAN comprend un E-UTRAN ; et
la réception d'un service en provenance du CN par l'intermédiaire du premier RAN ou du deuxième RAN.

2. Procédé selon la revendication 1, dans lequel l'IE de capacité d'accès radio comprend une ou plusieurs d'informations de technologie prise en charge, d'informations de largeur de bande prise en charge, d'informations d'évolutivité, d'informations de débit binaire pris en charge, d'informations de qualité de service, QoS, d'informations de type de terminal, d'informations de taille de mémoire, d'informations de taille d'écran, et d'informations de puissance de traitement.

3. Procédé selon la revendication 1, dans lequel le CN est un CN évolué.

4. Procédé selon la revendication 1, dans lequel le premier RAN est un UTRAN ou un E-UTRAN.

5. Unité émettrice-réceptrice sans fil, WTRU (202a-202d; 302), comprenant :
un organe de commande configuré pour générer un message de demande de rattachement qui comprend un élément d'informations, IE, de capacité de réseau et un IE de capacité d'accès radio, dans lequel l'IE de capacité d'accès radio indique des capacités de réseau d'accès radio terrestre de système de télécommunications mobiles universel, UMTS, évolué, E-UTRAN, de la WTRU (202a-202d; 302) ;
un émetteur configuré pour effectuer l'envoi du message de demande de rattachement à un réseau central, CN, par l'intermédiaire d'un premier réseau d'accès radio, RAN ; et
un récepteur configuré pour effectuer :
la réception d'un message d'acceptation de rattachement en provenance du CN par l'intermédiaire du premier RAN ;
la réception d'un message en provenance du CN indiquant des capacités d'un deuxième RAN sur la base des informations incluses dans le message de demande de rattachement par l'intermédiaire desquelles le CN est accessible, dans laquelle le deuxième RAN comprend un E-UTRAN ; et
la réception d'un service en provenance du CN par l'intermédiaire du premier RAN ou du deuxième RAN.

6. WTRU selon la revendication 5, dans laquelle l'IE de capacité d'accès radio comprend une ou plusieurs d'informations de technologie prise en charge, d'informations de largeur de bande prise en charge, d'informations d'évolutivité, d'informations de débit binaire pris en charge, d'informations de qualité de service, QoS, d'informations de type de terminal, d'informations de taille de mémoire, d'informations de taille d'écran, ou d'informations de puissance de traitement.

7. WTRU selon la revendication 5, dans laquelle le CN est un CN évolué.

8. WTRU selon la revendication 5, dans laquelle le premier RAN est un UTRAN ou un E-UTRAN.
